# EUROPEAN PATENT APPLICATION

(11) **EP 2 824 600 A1**
(43) Date of publication of application: **14.01.2015**
(21) Application number: 13757180.8
(22) Date of filing: 31.01.2013
(51) Int. Cl.: G06F 19/00

(54) **METHOD AND DEVICE FOR PROCESSING ANIMATED EMOTICON**

(30) Priority: 09.03.2012 CN 201210061716
(71) Applicant: Tencent Technology Shenzhen Company Limited, Shenzhen, Guangdong 518044 (CN)
(72) Inventor: ZHANG, Xiaolong, Shenzhen Guangdong 518044 (CN); LIN, Qianya, Shenzhen Guangdong 518044 (CN); WENG, Yueteng, Shenzhen Guangdong 518044 (CN); CHEN, Yuehai, Shenzhen Guangdong 518044 (CN); GUAN, Zhenan, Shenzhen Guangdong 518044 (CN)
(74) Representative: Körber, Martin Hans
(86) International application number: PCT/CN2013/071202
(87) International publication number: WO 2013/131422

(57) **Abstract**

The present disclosure relates to communication terminal technical field and provides a method and an apparatus for processing an animated emoticon. The method includes: obtaining an emoticon state of an animated emoticon transmitted by each of a plurality of clients, or obtaining emoticon states of an animated emoticon transmitted by any two of a plurality of clients; obtaining a determination result of emoticon states transmitted by the clients according to a predefined animated emoticon determination rule; and outputting the determination result to the clients for display. The present disclosure processes the emoticon states of the animated emoticon transmitted by clients communicating with each other via the animated emoticon, which realizes interaction operation of the animated emoticon transmitted by multiple clients and realizes displaying of an interacted result based on a mobile terminal. The user's experience is improved greatly.

## Description

This application claims the benefit of Chinese Patent Application No. 201210061716.3, filed March 09, 2012, entitled "method and apparatus for processing animated emoticon", the disclosure of which is incorporated herein in its entirety by reference.

### FIELD OF THE DISCLOSURE

The present disclosure relates to telecommunications techniques, and more particularly, to a method and an apparatus for processing an animated emoticon.

### BACKGROUND OF THE DISCLOSURE

Animated emoticon generally refers to an emoticon which changes dynamically and is added in messages transmitted by software. It makes message communication more interesting. Sometimes, it has an effect that characters cannot convey. Currently, most instant messaging tools support animated emoticon, e.g., MSN, QQ, etc. Animated emoticon is used even in microblog comments and private messages. However, different from the implementation in desktop personal computers and webpages, the implementation of the animated emoticon in mobile terminals has many difficulties since exhibition manners of different systems have to be considered. On the other hand, in a mobile terminal scenario, animated emoticons merely enrich the messages. For example, emoticons such as stone, scissors and cloth in a finger-guessing game or dice-throwing used in a chatting tool are merely animated emoticons. Message interaction in real life is not introduced into the message interaction of the software. In other words, an interacted result of the animated emoticons is not provided, which brings an insufficient experience to users.

### SUMMARY OF THE DISCLOSURE

Examples of the present disclosure provide a method and an apparatus for processing an animated emoticon, so as to solve a problem that existing techniques does not provide an interacted result of the animated emoticon on a mobile terminal platform.

According to an example of the present disclosure, a method for processing an animated emoticon is provided. The method includes:
obtaining an emoticon state of an animated emoticon transmitted by each of a plurality of clients, or obtaining emoticon states of an animated emoticon transmitted by any two of a plurality of clients;
obtaining a determination result of emoticon states transmitted by the clients according to a predefined animated emoticon determination rule; and
outputting the determination result to the clients for display..

According to another example of the present disclosure, an apparatus for processing an animated emoticon is provided. The apparatus includes:
an emoticon obtaining unit, adapted to obtain an emoticon state of an animated emoticon transmitted by each of a plurality of clients, or obtain emoticon states of an animated emoticon transmitted by any two of a plurality of clients;
a determination result obtaining unit, adapted to obtain a determination result of the emoticon states of the animated emoticon transmitted by the clients according to a predefined animated emoticon determination rule; and
a result outputting unit, adapted to output the determination result to the plurality of clients for display.

According to still another example of the present disclosure, a non-transitory computer-readable storage medium comprising a set of instructions is provided, the set of instructions to direct at least one processor to perform the method as described above.

The technical solution provided by the present disclosure brings out the following advantages.

In examples of the present disclosure, a determination result of an emoticon state of the animated emoticon transmitted by each of a plurality of clients is obtained according to a predefined animated emoticon determining rule. The determination result is displayed on the plurality of clients. Thus, the problem that existing techniques does not provide an interacted result of the animated emoticon on a mobile terminal platform but merely transmits the animated emoticon via a single message can be solved. Interaction messages between clients are enriched and usage effect of the clients is improved.

### BRIEF DESCRIPTION OF THE DRAWINGS

FIG. 1 is a flowchart illustrating a method for processing an animated emoticon according to a first example of the present disclosure.
FIG. 2 shows an application scenario of the animated emoticon according to an example of the present disclosure.
FIG. 3 is a flowchart illustrating an apparatus for processing an animated emoticon according to a second example of the present disclosure.
FIG. 4 is a schematic diagram illustrating an apparatus for processing an animated emoticon according to a third example of the present disclosure.

### DETAILED DESCRIPTION OF THE DISCLOSURE

The present disclosure is described in further detail hereinafter with reference to accompanying drawings and examples to make the technical solution and merits therein clearer.

In examples of the present disclosure, an emoticon state of the animated emoticon transmitted by each of a plurality of clients is obtained. A determination result of the emoticon states of the animated emoticon transmitted by the plurality of clients is obtained according to a predefined animated emoticon determining rule. The determination result is displayed on the plurality of clients. Thus, the problem that existing techniques does not provide an interacted result of the animated emoticon on a mobile terminal platform but merely transmits the animated emoticon via a single message can be solved. Interaction messages between clients are enriched and usage effect of the clients is improved.

Hereinafter, the detailed implementation of the present disclosure is described with reference to accompanying drawings.

### Example 1

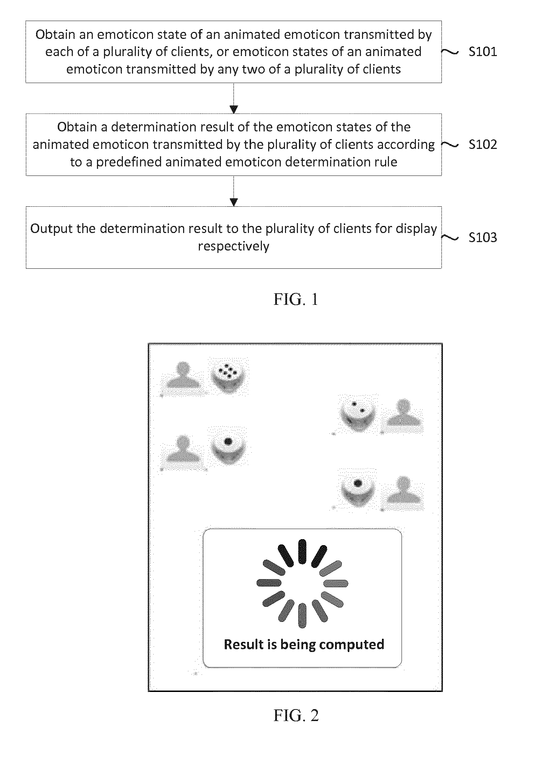

FIG. 1 is a flowchart illustrating a method for processing an animated emoticon according to a first example of the present disclosure.

At block S101, an emoticon state of an animated emoticon transmitted by each of a plurality of clients is obtained, or emoticon states of an animated emoticon transmitted by any two of a plurality of clients are obtained.

The animated emoticon includes any one or any combination of picture, character, and voice. The animated emoticon may be generated randomly by the user via the client, or consists of multiple emoticon states and switches between the multiple emoticon states dynamically. For example, in a dice-throwing game, the animated emoticon consists of three emoticon states, stone, scissors and cloth. The animated emoticon switches between the three emoticon states dynamically. In addition, the randomly generated emoticon state maybe one emoticon state generated randomly within a time period defined by the client or within a predefined time period. For example, during the dice-throwing game, an animation of rolling of the dice is displayed on the client. If the dice has rolled for a predefined time period, the dice stops rolling. The emoticon state generated at this time is random. Alternatively, the user may control the rolling time of the dice. For example, when the user clicks the rolling dice using a mouse, the dice stops rolling. The emoticon state generated at this time is also random.

Block S101 may specifically include:
determining whether each of the plurality of clients which communicate with each other and enable an animated emoticon interaction function has transmitted one emoticon state of the animated emoticon;
if yes, obtaining the emoticon state transmitted each of the plurality of clients; otherwise, keeping on determining whether each of the plurality of clients has transmitted one emoticon state of the animated emoticon until the emoticon state transmitted by each client is obtained.

In a practical application, suppose that users A and B chat with each other via WeChat using their respective clients, e.g., cell phone. The present disclosure is not limited to this. The user selects an animated emoticon that he desires to use from a local storage module or other storage modules, e.g., selects an animated emoticon including stone, scissors, cloth in the finger-guessing game, or selects a dice-throwing animated emoticon. In particular, the client may display a random procedure which simulates the stone, scissors, cloth or dice-throwing in a message interaction list, wherein the stone, scissors and cloth may be displayed in form of animation. The selection of any one of the stone, scissors and cloth may be random or determined by the user. The throwing of the dice may be displayed in a chatting window in form of a rolling animation. The display in the animation form also facilitates extension and compatibility of the application. Users A and B can see the emoticons transmitted by themselves and the peer side. At this time, an emoticon processing server may obtain the emoticon states of the animated emoticon transmitted by users A and B via their clients, so as to realize synchronization between the clients and the emoticon processing server.

In particular, after the plurality of clients communicating with each other respectively enables the animated emoticon interaction function, it is detected whether each client has transmitted one emoticon state of the animated emoticon. If only one client transmits an emoticon state, the process keeps on waiting for other clients or keeps on detecting whether other clients transmit emoticon states of the animated emoticon. The process advances to a next step after each of the plurality of client has transmitted one emoticon state of the animated emoticon or after clients which do not transmit emoticon state disable the animated emoticon interaction function, i.e., these clients do not participate in the emoticon interaction. The dice-throwing is taken as an example. After an emoticon state "6" is displayed on client A through an animation of dice-throw animated emoticon of user A, the emoticon state transmitted by client A is obtained. The process waits for emoticon states transmitted by clients B and C which interact with client A via emoticons. If client B disables the animated emoticon interaction function at this time, the process keeps on waiting for the emoticon state transmitted by client C. After the emoticon states of clients A and B which communicate with each other and enable the animated emoticon interaction function are received, the process advances to block S102.

It should be noted that, after transmitting an emoticon state of the animated emoticon, one client cannot transmit an emoticon state of the animated emoticon again before other clients participating in the animated emoticon interaction transmit emoticon states of the animated emoticon, which makes the animated emoticon interaction function more humanistic.

At block S102, a determination result of the emoticon states of the animated emoticon transmitted by the plurality of clients is obtained according to a predefined animated emoticon determination rule.

The predefined animated emoticon determination rule includes a relationship between the emoticon states of the animated emoticon. The determined result may include information indicating a compared result, e.g., lose, win, big, small, draw, etc.

In the example of the present disclosure, the relationship between multiple emoticon states of the animated emoticon needs to be defined in advance. The same emoticon states have a relationship of draw. For example, a relationship of 6 emoticon states in the dice-throw animated emoticon may be defined as: 6 spots > 5 spots > 4 spots > 3 spots > 2 spots > 1 spots. Or, a relationship of emoticon states stone, scissors and cloth in the finger-guessing game may be defined as: stone > scissors > cloth > stone. Or, a relationship may be defined for emoticon states which emerge randomly. Or, a relationship between facial emoticon states may be defined as: an emoticon state of "laugh" > an emoticon state of "smile". In addition, the multiple emoticon states transmitted by the plurality of clients may be processed according to the predefined animated emoticon determination rule to obtain a determined result.

In addition, during the execution of block S102, a prompt may be displayed on the clients in form of an animation to indicate that the determination result is being computed, e.g., the prompt information "result is being computed" as shown in FIG. 2, so as to further improve the user's experience.

At block S103, the determination result is outputted to the plurality of clients for display respectively.

In a practical application, after the determination result is obtained, the determination result may be presented to each client participating in the animated emoticon interaction in form of animated or static emoticon or information.

In the example of the present disclosure, the animated emoticon processing method introduces an interaction function into the processing of the animated emoticon, e.g., into emoticons such as finger-guessing which involve real-life behavior interactions, which facilitates the interaction and realizes remote communication. In such interaction experience, characteristics and functions of the "stone-scissors-cloth" finger-guessing game and the "dice-throw" game are reserved. And advantages of software, network and image transmission are utilized. In particular, in a chatting scenario based on mobile terminal platform, the interaction improves the user's experience.

### Example 2

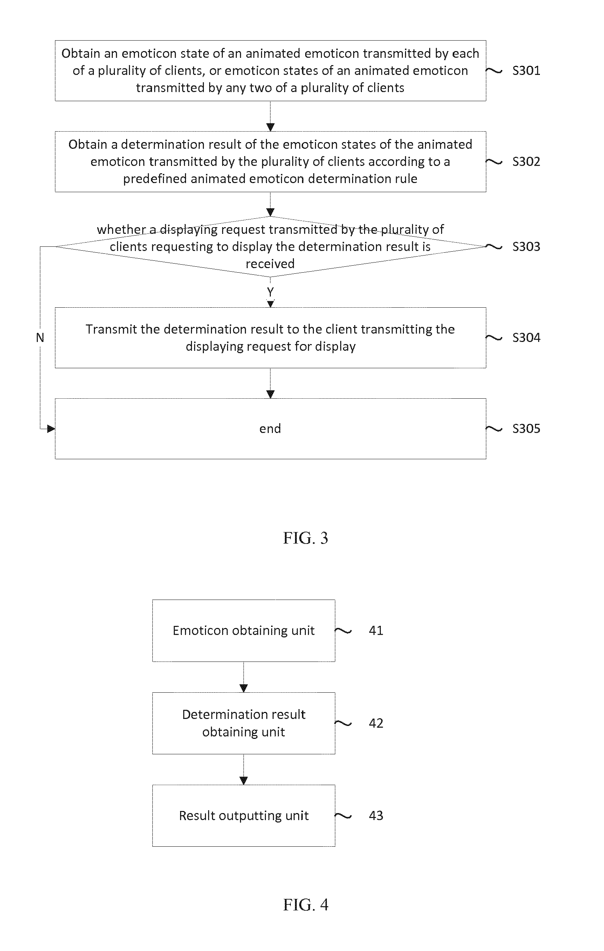

FIG. 3 is a flowchart illustrating a method for processing an animated emoticon according to a second example of the present disclosure.

At block S301, an emoticon state of an animated emoticon transmitted by each of a plurality of clients is obtained, or emoticon states of an animated emoticon transmitted by any two of a plurality of clients are obtained.

At block S302, a determination result of the emoticon states of the animated emoticon transmitted by the plurality of clients is obtained according to a predefined animated emoticon determination rule.

Blocks S301 and S302 are respectively corresponding to blocks S101 and S102 in the first example, and are not repeated herein.

At block S303, it is determined whether a displaying request requesting to display the determination result is received from the plurality of clients, if yes, block S304 is performed; otherwise, the method ends at block S305.

In a practical application, each client may configure whether to receive and display the determination result, which makes the displaying of the determination result more flexible and facilitates the usage of the user.

At block S304, the determination result is transmitted to the client transmitting the displaying request for display, and then the method ends at block S305.

In particular, after the determination result of the multiple emoticon states of the animated emoticon transmitted by the plurality of clients is obtained, it is further determined whether the displaying request is received from the plurality of clients. If received, the determination result is outputted to the client transmitting the displaying request for display. For clients which do not transmit the displaying request, the determination result is not transmitted to them.

In the example of the present disclosure, the emoticon state of the animated emoticon transmitted by each of a plurality of clients is evaluated. After the determination result is obtained, the determination result may be transmitted to the clients according to a practical requirement of each client, which makes the animated emoticon processing method more flexible and improves the user's experience.

Those with ordinary skill in the art would know that all or some of the blocks of the present disclosure may be implemented by a program executed on a relevant hardware. The program may be stored on a computer readable storage medium. The storage medium may be a ROM/RAM, a disk or a compact disk.

### Example 3

FIG. 4 is a schematic diagram illustrating an apparatus for processing an animated emoticon according to a third example of the present disclosure. In order to facilitate the description, only parts relevant to this example are shown.

The animated emoticon processing apparatus may be applied in a smart communication terminal or other communication terminals having information exchange function, e.g., cell phone. The apparatus may be a software unit running in the communication terminal, or integrated in the communication terminal as an independent component or run in an application system of the communication terminal. The apparatus includes an emoticon state obtaining unit 41, a determination result obtaining unit 42 and a result outputting unit 43.

The emoticon obtaining unit 41 is adapted to obtain an emoticon state of an animated emoticon transmitted by each of a plurality of clients, or obtain emoticon states of an animated emoticon transmitted by any two of a plurality of clients.

The animated emoticon includes any one or any combination of picture, character, and voice. The animated emoticon is generated randomly by the user via the client, or consists of multiple emoticon states and switches between the multiple emoticon states dynamically. For example, in a dice-throwing game, the animated emoticon consists of three emoticon states, stone, scissors and cloth. The animated emoticon switches between these three emoticon states dynamically. In addition, the randomly generated emoticon state may be one emoticon state randomly generated within a time period defined by the client or within a predefined time period. For example, during the dice-throwing game, an animation of rolling of the dice is displayed on the client. If the dice has rolled for a predefined time period, the dice stops rolling. The emoticon state generated at this time is random. Alternatively, the user may control the rolling time of the dice. For example, when the user clicks the rolling dice using a mouse, the dice stops rolling. The emoticon state generated at this time is also random.

The emoticon obtaining unit 41 may further include a detecting unit, a first result unit and a second result unit.

The detecting unit is adapted to detect whether each of the plurality of client which communicate with each other and enable the animated emoticon interaction function has transmitted one emoticon state of the animated emoticon.

The first result unit is adapted to obtain the emoticon state of each client if the detecting unit detects that each of the plurality of clients has transmitted one emoticon state.

The second result unit is adapted to trigger, if the detecting unit detects that not all of the client have transmitted one emoticon state, the detecting unit to keep on detecting until the emoticon state transmitted by each client is obtained.

In the example of the present disclosure, each of the plurality of clients which communicate with each other and participate in the animated emoticon interaction may transmit a selected emoticon state. After each client enables the animated emoticon interaction function, the detecting unit checks whether each client has transmitted an emoticon state. If yes, the first result unit obtains every emoticon state. Otherwise, the second unit triggers the detecting unit to keep on detecting until the emoticon state transmitted by each client is obtained. Thus, multiple emoticon states of the animated emoticon participating in the interaction may be obtained. In addition, after one or more clients configure to quit the animated emoticon interaction, the detecting unit does not perform detection with respect to the quit client any more. Instead, the emoticon states of remaining clients which still participate in the interaction are obtained. It should be noted that, after transmitting an emoticon state of the animated emoticon, one client cannot transmit an emoticon state of the animated emoticon again before other clients participating in the animated emoticon interaction transmit emoticon states of the animated emoticon, which makes the animated emoticon interaction function more humanistic.

The determination result obtaining unit 42 is adapted to obtain a determination result of the emoticon states of the animated emoticon transmitted by the clients according to a predefined animated emoticon determination rule.

The predefined animated emoticon determination rule includes a relationship between the emoticon states of the animated emoticon. The determined result may include information indicating a compared result, e.g., lose, win, big, small, draw, etc.

In the example of the present disclosure, the relationship between multiple emoticon states of the animated emoticon needs to be defined in advance. The same emoticon states have a relationship of draw. For example, a relationship of 6 emoticon states in the dice-throw animated emoticon may be defined as: 6 spots > 5 spots > 4 spots > 3 spots > 2 spots > 1 spots. Or, a relationship of emoticon states stone, scissors and cloth in the finger-guessing game may be defined as: stone > scissors > cloth > stone. Or, a relationship may be defined for emoticon states which emerge randomly. Or, a relationship between facial emoticon states may be defined as: an emoticon state of "laugh" > an emoticon state of "smile". In addition, the multiple emoticon states transmitted by the plurality of clients may be processed according to the predefined animated emoticon determination rule to obtain a determined result.

The result outputting unit 43 is adapted to output the determination result to the plurality of clients for display.

In this example, suppose that four clients A, B, C and D are participating in a finger-guessing game. The present disclosure is not limited to this. Suppose that client A transmits and displays an emoticon state of scissors of the animated emoticon randomly. Client B transmits an emoticon state of stone of the animated emoticon randomly. Clients C and D transmit emoticon states after a while due to some reasons. During this period, the detecting unit is keeping on detecting whether the emoticon states of the four clients have been received. At this time, if client D disables the emoticon interaction function, the detecting unit does not detect whether client D transmits an emoticon state anymore. After client D transmits an emoticon state of scissors randomly, the first result unit obtains the emoticon state transmitted by each client. Thereafter, the determination result obtaining unit 42 obtains a determination result according to a rule that stone > scissors. The determination result may include information indicating that A and C draw, and D is the winner. After the determination result is obtained, the result outputting unit 43 may present the determination result to each client participating in the animated emoticon interaction in form of animated or static emoticon or information.

In addition, the apparatus may further includes:
a determining unit, adapted to determine whether a displaying request requesting to transmit the determination result is received from the plurality of clients;
an ending unit, adapted to end the operation if the determining unit determines that no displaying request is received; and
a transmitting unit, adapted to transmit the determination result to the client transmitting the displaying request for display if the determining unit determines that the displaying request is received.

In the example of the present disclosure, each of the plurality of clients which communicate with each other and enable the animated emoticon interaction function may configure whether to receive and display the determination result. After obtaining the determination result of the animated emoticon transmitted by the plurality of clients, the determining unit determines whether a displaying request is received from the plurality of the clients. If yes, the transmitting unit transmits the determination result to the client transmitting the displaying request to display. For clients which do not transmit the displaying request, the transmitting unit does not transmit the determination result to them, which makes the displaying of the determination result more flexible and facilitates the user's usage.

In examples of the present disclosure, an emoticon state of the animated emoticon transmitted by each of a plurality of clients is obtained. A determination result of the emoticon states transmitted by the clients is obtained according to a predefined animated emoticon determining rule. The determination result is displayed on the plurality of clients. Thus, the problem that existing techniques does not provide an interacted result of the animated emoticon on a mobile terminal platform but merely transmits the animated emoticon via a single message can be solved. Interaction messages between clients are enriched and usage effect of the clients is improved.

Those with ordinary skill in the art would know that all or some of the blocks of the present disclosure may be implemented by software and relevant hardware, or by hardware. But the former is better is most cases.

The technical solution of the present disclosure or the contribution part of the present disclosure may be embodies by a software produce in essence. The computer software product includes a set of instructions stored on a machine readable storage medium, e.g., floppy, hard disk or compact disk of a computer. The set of instructions may be read and execute by the computer which may be a terminal device (such as a cell phone, a personal computer, a server, or a network device, etc.). When the set of instructions are executed, the computer executes the method described in the above method examples of the present disclosure. The functions and technical effect implemented by the computer is similar to those described above and will not be repeated herein.

What has been described and illustrated herein is a preferred example of the disclosure along with some of its variations. Many variations are possible within the scope of the disclosure, which is intended to be defined by the following claims -- and their equivalents -- in which all terms are meant in their broadest reasonable sense unless otherwise indicated.

## Claims

1. A method for processing an animated emoticon, comprising:
obtaining an emoticon state of an animated emoticon transmitted by each of a plurality of clients, or obtaining emoticon states of an animated emoticon transmitted by any two of a plurality of clients;
obtaining a determination result of emoticon states transmitted by the clients according to a predefined animated emoticon determination rule; and
outputting the determination result to the clients for display.

2. The method of claim 1, wherein the animated emoticon comprises any one or any combination of picture, character and voice; the animated emoticon is generated randomly by a user via the client, or, the animated emoticon consists of multiple emoticon states and switches between the multiple emoticon states dynamically.

3. The method of claim 2, wherein the obtaining the emoticon state of the animated emoticon transmitted by each of the plurality of clients comprises:
detecting whether each of the plurality of clients which communicate with each other and enable an animated emoticon interaction function has transmitted one emoticon state of the animated emoticon;
if each of the plurality of clients has transmitted one emoticon state, obtaining the emoticon state transmitted by each client; otherwise, keeping on detecting until the emoticon state transmitted by each client is obtained.

4. The method of claim 2, wherein the predefined animated emoticon determination rule comprises a relationship between the emoticon states of the animated emoticon.

5. The method of claim 1, further comprising:
after obtaining the determination result of the emoticon states transmitting by the clients and before outputting the determination result to the clients for display,
determining whether a displaying request requesting for transmitting the determination result is received from the plurality of clients;
if the displaying request is not received, ending the method;
if the displaying request is received, the process of outputting the determination result to the clients comprises:
outputting the determination result to the client transmitting the displaying request for display.

6. The apparatus for processing an animated emoticon, comprising:
an emoticon obtaining unit, adapted to obtain an emoticon state of an animated emoticon transmitted by each of a plurality of clients, or obtain emoticon states of an animated emoticon transmitted by any two of a plurality of clients;
a determination result obtaining unit, adapted to obtain a determination result of the emoticon states of the animated emoticon transmitted by the clients according to a predefined animated emoticon determination rule; and
a result outputting unit, adapted to output the determination result to the plurality of clients for display.

7. The apparatus of claim 6, wherein
the animated emoticon comprises any one or any combination of picture, character and voice; the animated emoticon is generated randomly by a user via the client, or, the animated emoticon consists of multiple emoticon states and switches between the multiple emoticon states dynamically.

8. The apparatus of claim 7, wherein the emoticon obtaining unit further comprises:
a detecting unit, adapted to detect whether each of the plurality of client which communicate with each other and enable the animated emoticon interaction function has transmitted one emoticon state of the animated emoticon;
a first result unit, adapted to obtain the emoticon state of each client if the detecting unit detects that each of the plurality of clients has transmitted one emoticon state; and
a second result unit, adapted to trigger, if the detecting unit detects that not all of the client have transmitted one emoticon state, the detecting unit to keep on detecting until the emoticon state transmitted by each client is obtained.

9. The apparatus of claim 7, wherein the predefined animated emoticon determination rule comprises a relationship between the emoticon states of the animated emoticon.

10. The apparatus of claim 7, further comprising:
a determining unit, adapted to determine whether a displaying request requesting to transmit the determination result is received from the plurality of clients;
an ending unit, adapted to end operation if the determining unit determines that no displaying request is received; and
a transmitting unit, adapted to transmit the determination result to the client transmitting the displaying request for display if the determining unit determines that the displaying request is received.

11. A non-transitory computer-readable storage medium comprising a set of instructions, the set of instructions to direct at least one processor to perform the method as claimed in any one of claims 1 to 5.
